(19) Europäisches Patentamt
European Patent Office
Office européen des brevets

(11) EP 0 642 735 B1

(12) **EUROPÄISCHE PATENTSCHRIFT**

(45) Veröffentlichungstag und Bekanntmachung des Hinweises auf die Patenterteilung:
**04.06.1997 Patentblatt 1997/23**

(51) Int. Cl.[6]: **A01N 43/54**
// (A01N43/54, 37:50)

(21) Anmeldenummer: **94113852.1**

(22) Anmeldetag: **03.09.1994**

(54) **Fungizide Mischungen**
Fungicidal mixtures
Mélanges fongicides

(84) Benannte Vertragsstaaten:
**AT BE CH DE DK ES FR GB GR IE IT LI NL PT SE**

(30) Priorität: **13.09.1993 DE 4330970**

(43) Veröffentlichungstag der Anmeldung:
**15.03.1995 Patentblatt 1995/11**

(73) Patentinhaber: **BASF Aktiengesellschaft**
**67063 Ludwigshafen (DE)**

(72) Erfinder:
- **Eicken, Karl Dr.**
  **67157 Frankenthal (DE)**
- **Müller, Bernd Dr.**
  **67227 Mannheim (DE)**
- **Sauter, Hubert Dr.**
  **68167 Mannheim (DE)**
- **Lorenz, Gisela Dr.**
  **67434 Neustadt (DE)**
- **Ammermann, Eberhard Dr.**
  **64646 Heppenheim (DE)**
- **Schelberger, Klaus**
  **67161 Gönnheim (DE)**
- **Saur, Reinhold Dr.**
  **67459 Böhl-Iggelheim (DE)**

(56) Entgegenhaltungen:
**EP-A- 0 224 339** **EP-A- 0 254 426**
**EP-A- 0 310 550** **EP-A- 0 398 692**
**EP-A- 0 531 837** **EP-A- 0 548 025**
**EP-A- 0 556 157** **DD-A- 151 404**
**GB-A- 2 267 644**

- **RESEARCH DISCLOSURE, Nr.346, Februar 1993, HAVANT GB Seite 158 DISCLOSED ANONYMOUSLY '346121, Mixtures of Fungicides'**
- **CHEMICAL ABSTRACTS, vol. 118, no. 7, 15. Februar 1993, Columbus, Ohio, US; abstract no. 59429,**
- **RESEARCH DISCLOSURE, Bd.348, April 1993, HAVANT GB Seite 267 DISCLOSED ANONYMOUSLY '34874, Mixtures of Fungicides and Herbicides'**
- **RESEARCH DISCLOSURE, Nr.338, Juni 1992, HAVANT GB Seiten 506 - 510 DISCLOSED ANONYMOUSLY '33893, Mixtures of Fungicides and Insecticides'**
- **CHEMICAL ABSTRACTS, vol. 118, no. 23, 7. Juni 1993, Columbus, Ohio, US; abstract no. 228112, E.AMMERMANN ET AL. 'BAS 490 F - a broad-spectrum fungicide with a new mode of action'**

Bemerkungen:
Die Akte enthält technische Angaben, die nach dem Eingang der Anmeldung eingereicht wurden und die nicht in dieser Patentschrift enthalten sind.

EP 0 642 735 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.14.7/3.4

## Beschreibung

Die vorliegende Erfindung betrifft eine fungizide Mischung, welche eine Verbindung der Formel I

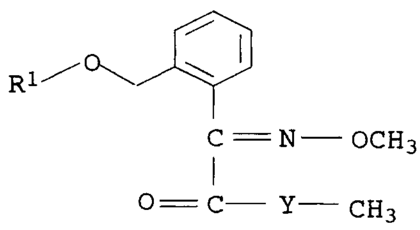

I

in der $R^1$ für 2-Methylphenyl oder 2,5-Dimethylphenyl steht und Y Sauerstoff oder NH bedeutet, und ein Pyrimidinderivat der Formel II,

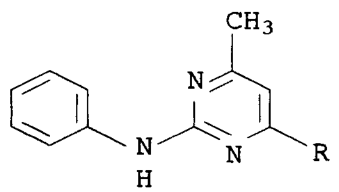

II

in der R für Methyl, Propin-1-yl oder Cyclopropyl steht, in einer synergistisch wirksamen Menge enthält.

Außerdem betrifft die Erfindung Verfahren zur Bekämpfung von Schadpilzen mit den Verbindungen I und II oder sie enthaltenden synergistischen Mischungen und die Verwendung der Verbindungen I bzw. der Verbindungen II zur Herstellung derartiger Mischungen.

Verbindungen der Formel I, ihre Herstellung und ihre Wirkung gegen Schadpilze sind aus der Literatur bekannt (EP-A 253 213, EP-A 382 375, EP-A 398 692).

Ebenfalls bekannt sind die Pyrimidinderivate II, deren Herstellung und deren Wirkung gegen Schadpilze [R = Methyl: DD-A 151 404 (common name: Pyrimethanil); R = 1-Propinyl: EP-A 224 339 (common name: Mepanipyrim); R=Cyclopropyl: EP-A 310 550].

Desweiteren werden in der EP-A 531 837 synergistische fungizide Mischungen aus bestimmten Azolwirkstoffen und der Verbindung I.A

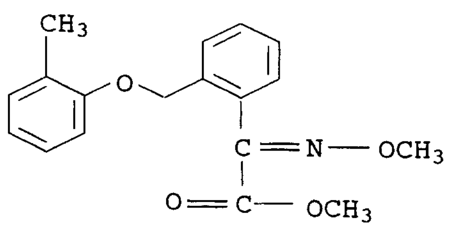

I.A

beschrieben.

Aus der älteren britischen Anmeldung GB-A 2 267 644 ist außerdem die synergistische Mischung der Verbindung I.A mit der Verbindung II.A

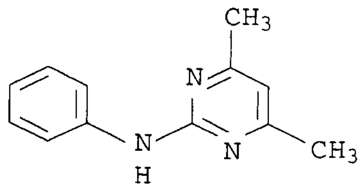

II.A

bekannt.

Im Hinblick auf eine Senkung der Aufwandmengen und eine Verbesserung des Wirkungsspektrums der bekannten Verbindungen lagen der vorliegenden Erfindungen Mischungen zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und der Verbindungen II oder bei Anwendung der Verbindungen I und der Verbindungen II nacheinander Schadpilze besser bekämpfen lassen als nur mit den Verbindungen I oder II.

Die Verbindungen der Formel I können in Bezug auf die C=N-Doppelbindung in der E- oder der Z-Konfiguration (in Bezug auf die Gruppierung $OCH_3$ und $CO\text{-}YCH_3$) vorliegen. Demgemäß können sie in der erfindungsgemäßen Mischung entweder als reine Isomere oder als E/Z-Isomerenmischung Verwendung finden. Bevorzugt findet die E/Z-Isomerenmischung oder das E-Isomere Anwendung, wobei in vielen Fällen das E-Isomere besonders bevorzugt ist.

Die Pyrimidinderivate der Formel II sind wegen des basischen Charakters der NH-Gruppierung in der Lage, mit anorganischen oder organischen Säuren oder mit Metallionen Salze zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calcium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Im Hinblick auf die Anwendbarkeit als Mischungspartner sind insbesondere die Verbindungen I.A und I.B bevorzugt.

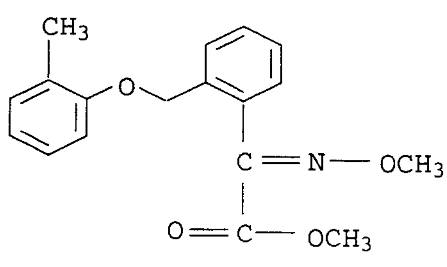

I.A

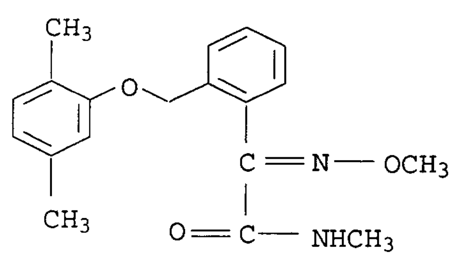

I.B

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder

auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der Ascomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 10:1 bis 0.1:1, vorzugsweise 5:1 bis 0.2:1, insbesondere 3:1 bis 0.3:1 angewendet.

Die Aufwandmengen der erfindungsgemäßen Mischungen liegen je nach Art des gewünschten Effekts bei 0,01 bis 3 kg/ha, vorzugsweise 0,1 bis 1,5 kg/ha, insbesondere 0,4 bis 1,0 kg/ha.

Die Aufwandmengen liegen dabei für die Verbindungen I bei 0,01 bis 0,5 kg/ha, vorzugsweise 0,05 bis 0,5 kg/ha, insbesondere 0,05 bis 0,2 kg/ha.

Die Aufwandmengen für die Verbindungen II liegen entsprechend bei 0,1 bis 1,0 kg/ha, vorzugsweise 0,4 bis 1,0 kg/ha, insbesondere 0,4 bis 0,8 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 8 g/kg verwendet.

Sofern für Pflanzen pathogene Schadpilze zu bekämpfen sind erfolgt die getrennte oder gemeinsame Applikation der Verbindungen I und II oder der Mischungen aus den Verbindungen I und II durch besprühen oder bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl,

Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I oder II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Der synergistische Effekt der erfindungsgemäßen Mischungen ließ sich gemäß der Formel von S. R. Colby (Weeds 15, 20-22 (1967))

$$E = X + Y - X \times Y/100$$

ermitteln, wobei die Variablen folgende Bedeutung haben:

- X Der meßbare Effekt des Wirkstoffs I bei einer Aufwandmenge [a]
- Y Der meßbare Effekt des Wirkstoffs II bei einer Aufwandmenge [b]
- E Der erwartete meßbare Effekt einer Mischung des Wirkstoffs I bei der Aufwandmenge [a] und des Wirkstoffs II bei der Aufwandmenge [b]

Aus der Differenz des Erwartungswerts E nach Colby und des Meßwerts ergibt sich, ob ein Synergismus (Verstärkung des Effekts bzw. Steigerung der Wirkung) oder ein Antagonismus (Abschwächung des Effekts bzw. Herabsetzung der Wirkung) vorliegt, bzw. sofern beide Werte übereinstimmen, daß lediglich additive Effekte zum tragen kommen.

Die verbesserte biologische Wirkung der Mischungen im Vergleich mit den Einzelsubstanzen ließ sich durch die folgenden Versuche zeigen:

Puccinia recondita

Blätter von Weizensämlingen (Sorte "Frühgold") wurden mit der wäßrigen Wirkstoffaufbereitung behandelt. Am nächsten Tag wurde die behandelten Pflanzen mit Sporen des Braunrosts (Puccinia recondita) bestäubt und die so behandelten Pflanzen wurden 24 h bei 20-22°C und einer relativen Luftfeuchtigkeit von 90-95 % inkubiert. Nach weiteren 8 Tagen bei 20-22°C und 65-70 % relativer Luftfeuchtigkeit wurde das Ausmaß der Pilzentwicklung ermittelt. Die Auswertung erfolgte visuell (Angabe der befallenen Blätter in %).

Der Wirkungsgrad wurde nach der Formel von Abbott wie folgt errechnet:

$$\text{Wirkungsgrad} = [1 - (\text{\% Befall nach Behandlung}) : (\text{\% Befall ohne Behandlung})] \times 100$$

Die Ergebnisse sind in den folgenden Tabellen zusammengestellt:

| Wirkstoff | Aufwandmenge [ppm] | Wirkungsgrad [Abbott] |
|---|---|---|
| I.A | 500 | 89 |
| I.A | 250 | 78 |
| I.A | 125 | 78 |
| I.A | 100 | 78 |
| I.A | 50 | 67 |
| I.A | 25 | 11 |
| I.A | 12,5 | 22 |

| Wirkstoff | Aufwandmenge [ppm] | Wirkungsgrad [Abbott] |
|---|---|---|
| Pyrimethanil | 500 | 22 |
| Pyrimethanil | 250 | 0 |
| Pyrimethanil | 125 | 0 |
| Pyrimethanil | 100 | 0 |
| Pyrimethanil | 50 | 0 |
| Pyrimethanil | 25 | 0 |
| Pyrimethanil | 12,5 | 0 |
| Mepanipyrin | 500 | 0 |
| Mepanipyrin | 250 | 0 |
| Mepanipyrin | 125 | 0 |
| Mepanipyrin | 100 | 0 |
| Mepanipyrin | 50 | 0 |
| Mepanipyrin | 25 | 0 |
| Mepanipyrin | 12,5 | 0 |

Die mit den erfindungegemäßen Mischungen erzielten Wirkungen sind in den anschließenden Tabellen zusammengestellt:

| I.A [ppm] | Pyrimethanil [ppm] | Wirkungsgrad (beobachtet) | Wirkungsgrad (nach Colby) |
|---|---|---|---|
| 250 | 250 | 94 | 78 |
| 125 | 125 | 94 | 78 |
| 50 | 50 | 89 | 67 |
| 25 | 25 | 83 | 11 |
| 250 | 25 | 89 | 78 |
| 125 | 12,5 | 89 | 78 |
| 50 | 5 | 78 | 67 |
| 25 | 2,5 | 78 | 11 |
| 25 | 250 | 83 | 11 |
| 12,5 | 125 | 78 | 22 |

| I.A [ppm] | Mepanipyrim [ppm] | Wirkungsgrad (beobachtet) | Wirkungsgrad (nach Colby) |
|---|---|---|---|
| 100 | 100 | 83 | 78 |
| 50 | 50 | 78 | 67 |
| 25 | 25 | 67 | 11 |
| 50 | 500 | 78 | 67 |

**Patentansprüche**

**Patentansprüche für folgende Vertragsstaaten : AT, BE, CH, DE, DK, ES, FR, GR, IE, IT, LI, NL, PT, SE**

**1.** Fungizide Mischung, enthaltend eine Verbindung der Formel I,

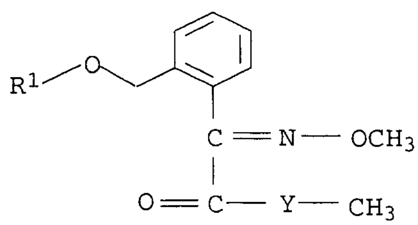

I

in der $R^1$ für 2-Methylphenyl oder 2,5-Dimethylphenyl steht und Y Sauerstoff oder NH bedeutet, und ein Pyrimidinderivat der Formel II,

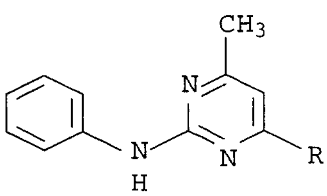

II

in der R für Methyl, Propin-1-yl oder Cyclopropyl steht, in einer synergistisch wirksamen Menge.

**2.** Fungizide Mischung nach Anspruch 1, enthaltend ein Oximetherderivat der Formel I.A

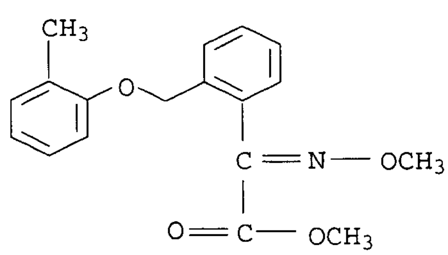

I.A

**3.** Fungizide Mischung nach Anspruch 1, enthaltend ein Oximetherderivat der Formel I.B

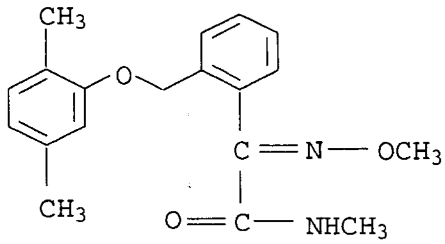

I.B

4. Fungizide Mischung nach Anspruch 1, dadurch gekennzeichnet, daß das Gewichtsverhältnis der Verbindung I zu der Verbindung II 10:1 bis 0,1:1 beträgt.

5. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit einer Verbindung der Formel I gemäß Anspruch 1 und einer Verbindung der Formel II gemäß Anspruch 1 behandelt.

6. Verfahren nach Anspruch 5, dadurch gekennzeichnet, daß man die Verbindung I und die Verbindung II gleichzeitig gemeinsam oder getrennt oder nacheinander ausbringt.

7. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,01 bis 0,5 kg/ha einer Verbindung I gemäß Anspruch 1 behandelt.

8. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,1 bis 1,0 kg/ha einer Verbindung II gemäß Anspruch 1 behandelt.

9. Verwendung der Verbindungen I gemäß Anspruch 1 zur Herstellung von fungizid wirksamen synergistischen Mischungen gemäß Anspruch 1.

10. Verwendung der Verbindungen I.A gemäß Anspruch 2 zur Herstellung von fungizid wirksamen synergistischen Mischungen gemäß Anspruch 1.

11. Verwendung der Verbindungen I.B gemäß Anspruch 3 zur Herstellung von fungizid wirksamen synergistischen Mischungen gemäß Anspruch 1.

12. Verwendung der Verbindungen II gemäß Anspruch 1 zur Herstellung von fungizid wirksamen synergistischen Mischungen gemäß Anspruch 1.

**Patentansprüche für folgenden Vertragsstaat : GB**

1. Fungizide Mischung, enthaltend eine Verbindung der Formel I,

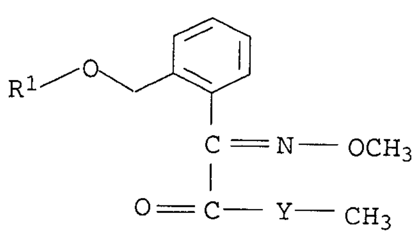

I

in der $R^1$ für 2-Methylphenyl oder 2,5-Dimethylphenyl steht und Y Sauerstoff oder NH bedeutet, und ein Pyrimidinderivat der Formel II,

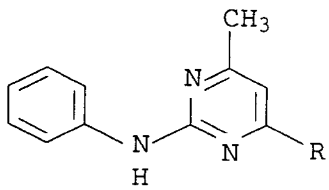

II

in der R für Methyl, Propin-1-yl oder Cyclopropyl steht, in einer synergistisch wirksamen Menge, ausgenommen die Mischung des Oximetherderivats der Formel I.A

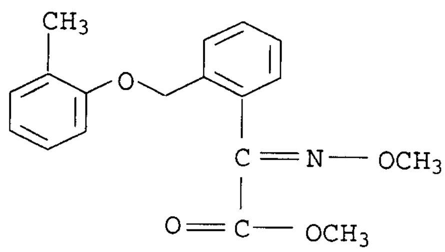

I.A

mit dem Pyrimidinderivat der Formel II.A.

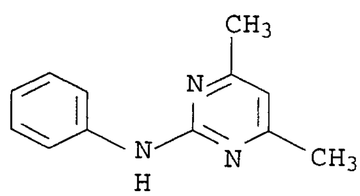

II.A

**2.** Fungizide Mischung nach Anspruch 1, enthaltend ein Oximetherderivat der Formel I.A

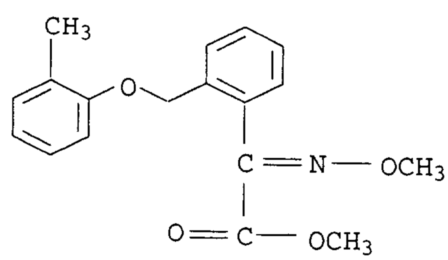

I.A

**3.** Fungizide Mischung nach Anspruch 1, enthaltend ein Oximetherderivat der Formel I.B

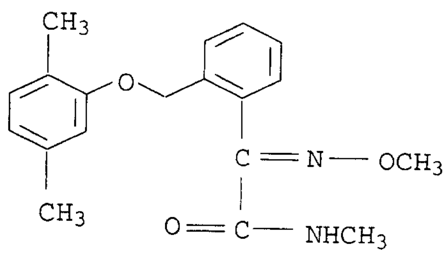

I.B

4. Fungizide Mischung nach Anspruch 1, dadurch gekennzeichnet, daß das Gewichtsverhältnis der Verbindung I zu der Verbindung II 10:1 bis 0,1:1 beträgt.

5. Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit einer Verbindung der Formel I gemäß Anspruch 1 und einer Verbindung der Formel II gemäß Anspruch 1 behandelt.

6. Verfahren nach Anspruch 5, dadurch gekennzeichnet, daß man die Verbindung I und die Verbindung II gleichzeitig gemeinsam oder getrennt oder nacheinander ausbringt.

7. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,01 bis 0,5 kg/ha einer Verbindung I gemäß Anspruch 1 behandelt.

8. Verfahren nach Anspruch 5, dadurch gekennzeichnet, daß man die Schadpilze, deren Lebensraum oder die von ihnen freizuhaltenden Pflanzen, Samen, Böden, Flächen, Materialien oder Räume mit 0,1 bis 1,0 kg/ha einer Verbindung II gemäß Anspruch 1 behandelt.

9. Verwendung der Verbindungen I gemäß Anspruch 1 zur Herstellung von fungizid wirksamen synergistischen Mischungen gemäß Anspruch 1.

10. Verwendung der Verbindungen I.A gemäß Anspruch 2 zur Herstellung von fungizid wirksamen synergistischen Mischungen gemäß Anspruch 1.

11. Verwendung der Verbindungen I.B gemäß Anspruch 3 zur Herstellung von fungizid wirksamen synergistischen Mischungen gemäß Anspruch 1.

12. Verwendung der Verbindungen II gemäß Anspruch 1 zur Herstellung von fungizid wirksamen synergistischen Mischungen gemäß Anspruch 1.

## Claims

**Claims for the following Contracting States : AT, BE, CH, DE, DK, ES, FR, GR, IE, IT, LI, NL, PT, SE**

1. A fungicidal mixture comprising a compound of the formula I

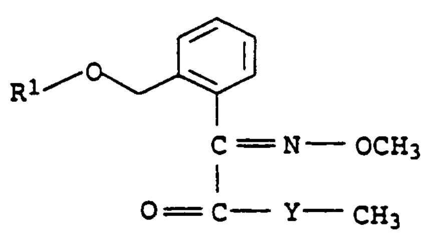

I

where $R^1$ is 2-methylphenyl or 2,5-dimethylphenyl and Y is oxygen or NH, and a pyrimidine derivative of the formula II

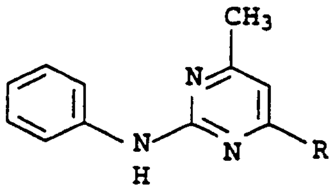

II

where R is methyl, propyn-1-yl or cyclopropyl, in a synergistically active amount.

2. A fungicidal mixture as claimed in claim 1, comprising an oxime ether derivative of the formula I.A

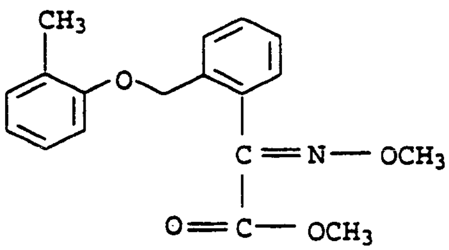

I.A

3. A fungicidal mixture as claimed in claim 1, comprising an oxime ether derivative of the formula I.B

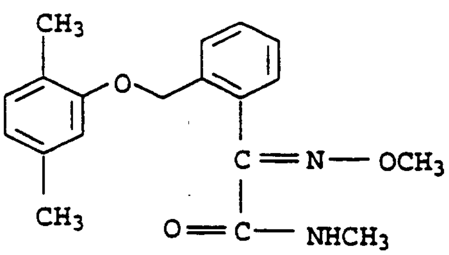

I.B

4. A fungicidal mixture as claimed in claim 1, wherein the weight ratio of the compound I to the compound II is from 10:1 to 0.1:1.

5. A process for combating harmful fungi, which comprises treating the harmful fungi, their habitat or the plants, seeds, soils, areas, materials or spaces to be kept free from them with a compound of the formula I as claimed in claim 1 and a compound of the formula II as claimed in claim 1.

6. A process as claimed in claim 5, wherein the compound I and the compound II are applied simultaneously jointly or separately or successively.

7. A process as claimed in claim 5, wherein the harmful fungi, their habitat or the plants, seeds, soils, areas, materials or spaces to be kept free from them are treated with from 0.01 to 0.5 kg/ha of a compound I as claimed in claim 1.

8. A process as claimed in claim 5, wherein the harmful fungi, their habitat or the plants, seeds, soils, areas, materials or spaces to be kept free from them are treated with from 0.1 to 1.0 kg/ha of a compound II as claimed in claim 1.

9. The use of the compounds I as claimed in claim 1 for the preparation of fungicidally active synergistic mixtures as

claimed in claim 1.

10. The use of the compounds II as claimed in claim 1 for the preparation of fungicidally active synergistic mixtures as claimed in claim 1.

11. The use of the compounds I.B as claimed in claim 3 for the preparation of fungicidally active synergistic mixtures as claimed in claim 1.

12. The use of the compounds II as claimed in claim 1 for the preparation of fungicidally active synergistic mixtures as claimed in claim 1.

**Claims for the following Contracting State : GB**

1. A fungicidal mixture comprising a compound of the formula I

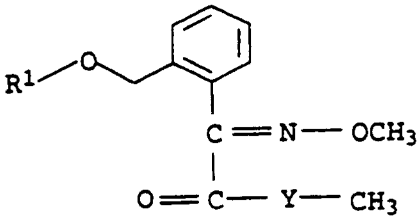

I

where $R^1$ is 2-methylphenyl or 2,5-dimethylphenyl and Y is oxygen or NH, and a pyrimidine derivative of the formula II

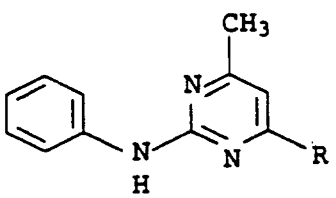

II

where R is methyl, propyn-1-yl or cyclopropyl, in a synergistically active amount, excluding the mixture of the oxime ether derivative of the formula I.A

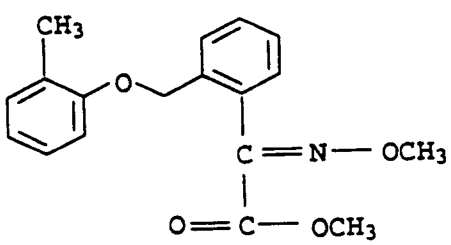

I.A

with the pyrimidine derivative of the formula II.A

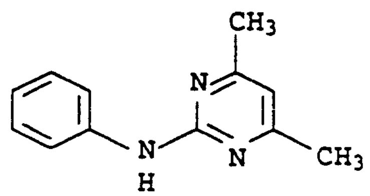

II.A

2. A fungicidal mixture as claimed in claim 1, comprising an oxime ether derivative of the formula I.A

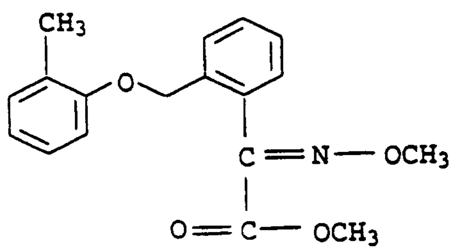

I.A

3. A fungicidal mixture as claimed in claim 1, comprising an oxime ether derivative of the formula I.B

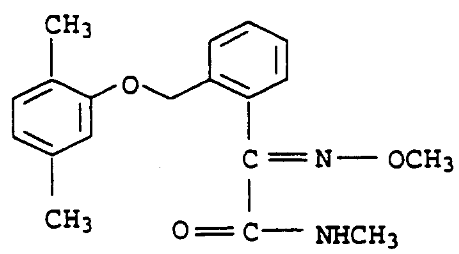

I.B

4. A fungicidal mixture as claimed in claim 1, wherein the weight ratio of the compound I to the compound II is from 10:1 to 0.1:1.

5. A process for combating harmful fungi, which comprises treating the harmful fungi, their habitat or the plants, seeds, soils, areas, materials or spaces to be kept free from them with a compound of the formula I as claimed in claim 1 and a compound of the formula II as claimed in claim 1.

6. A process as claimed in claim 5, wherein the compound I and the compound II are applied simultaneously jointly or separately or successively.

7. A process as claimed in claim 5, wherein the harmful fungi, their habitat or the plants, seeds, soils, areas, materials or spaces to be kept free from them are treated with from 0.01 to 0.5 kg/ha of a compound I as claimed in claim 1.

8. A process as claimed in claim 5, wherein the harmful fungi, their habitat or the plants, seeds, soils, areas, materials or spaces to be kept free from them are treated with from 0.1 to 1.0 kg/ha of a compound II as claimed in claim 1.

9. The use of the compounds I as claimed in claim 1 for the preparation of fungicidally active synergistic mixtures as claimed in claim 1.

10. The use of the compounds I.A as claimed in claim 2 for the preparation of fungicidally active synergistic mixtures

as claimed in claim 1.

11. The use of the compounds I.B as claimed in claim 3 for the preparation of fungicidally active synergistic mixtures as claimed in claim 1.

12. The use of the compounds II as claimed in claim 1 for the preparation of fungicidally active synergistic mixtures as claimed in claim 1.

**Revendications**

**Revendications pour les Etats contractants suivants : AT, BE, CH, DE, DK, ES, FR, GR, IE, IT, LI, NL, PT, SE**

1. Mélange fongicide contenant un composé de formule I

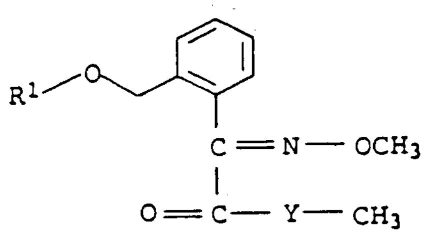

I

dans laquelle $R^1$ représente un groupe 2-méthylphényle ou 2,5-diméthylphényle et Y représente l'oxygène ou NH, et un dérivé de la pyrimidine répondant à la formule II

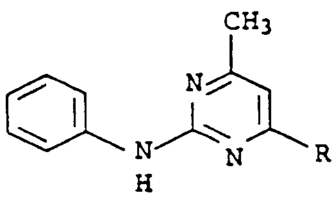

II

dans laquelle R représente un groupe méthyle, propyn-1-yle ou cyclopropyle, en quantités à effet synergique.

2. Mélange fongicide selon revendication 1, contenant un dérivé d'éther d'oxime de formule I.A

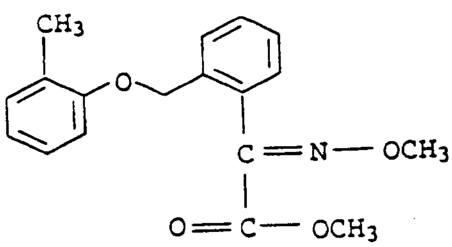

I.A

3. Mélange fongicide selon revendication 1, contenant un dérivé d'éther d'oxime de formule I.B

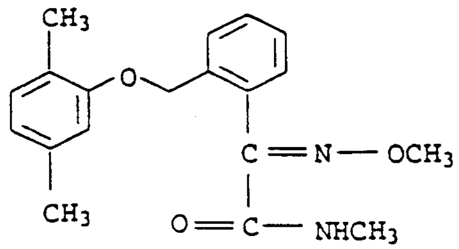

I.B

4. Mélange fongicide selon revendication 1, caractérisé par le fait que les proportions relatives en poids entre le composé I et le composé II sont de 10 : 1 à 0,1 : 1.

5. Procédé pour combattre les mycètes nuisibles, caractérisé par le fait que l'on traite les mycètes nuisibles, leur habitat ou les végétaux, semences, sols, surfaces, matières ou locaux qu'on veut protéger contre ces mycètes, par un composé de formule I selon revendication 1 et un composé de formule II selon revendication 1.

6. Procédé selon revendication 5, caractérisé par le fait que l'on applique le composé I et le composé II simultanément, ensemble ou séparément, ou successivement.

7. Procédé selon revendication 5, caractérisé par le fait que l'on traite les mycètes nuisibles, leur habitat ou les végétaux, semences, sols, surfaces, matières ou locaux qu'on veut protéger contre les mycètes nuisibles, par 0,01 à 0,5 kg/ha d'un composé I selon revendication 1.

8. Procédé selon revendication 5, caractérisé par le fait que l'on traite les mycètes nuisibles, leur habitat ou les végétaux, semences, sols, surfaces, matières ou locaux qu'on veut protéger contre les mycètes nuisibles par 0,1 à 1,0 kg/ha d'un composé II selon revendication 1.

9. Utilisation des composés I selon revendication 1, pour la préparation de mélanges à activité fongicide synergique.

10. Utilisation du composé I.A selon revendication 2, pour la préparation des mélanges à activité fongicide synergique selon revendication 1.

11. Utilisation du composé I.B selon revendication 3 pour la préparation des mélanges à activité fongicide synergique selon revendication 1.

12. Utilisation des composés II selon revendication 1 pour la préparation de mélanges à activité fongicide synergique selon revendication 1.

**Revendications pour l'Etat contractant suivant : GB**

1. Mélange fongicide contenant un composé de formule I

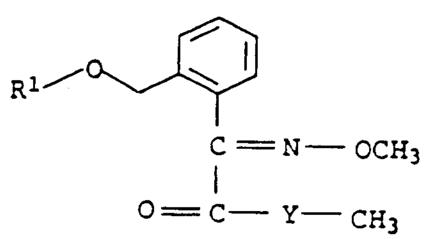

I

dans laquelle $R^1$ représente un groupe 2-méthylphényle ou 2,5-diméthylphényle et Y représente l'oxygène ou NH, et un dérivé de la pyrimidine répondant à la formule II

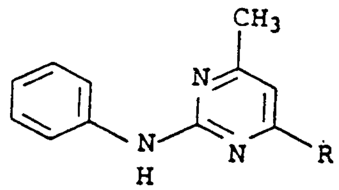

II

dans laquelle R représente un groupe méthyle, propyn-1-yle ou cyclopropyle, en quantités à effet synergique, à l'exception du mélange du dérivé d'éther d'oxime de formule I.A.

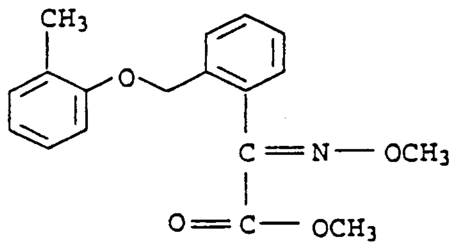

I.A

et du dérivé de pyrimidine de formule II. A

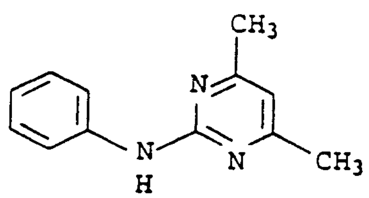

II.A

2. Mélange fongicide selon revendication 1, contenant un dérivé d'éther d'oxime de formule I.A

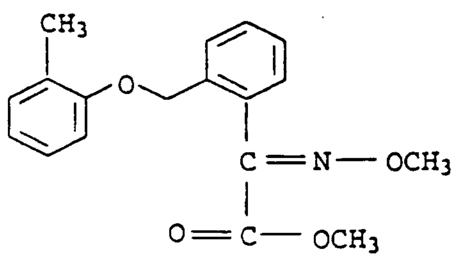

I.A

3. Mélange fongicide selon revendication 1, contenant un dérivé d'éther d'oxime de formule I.B

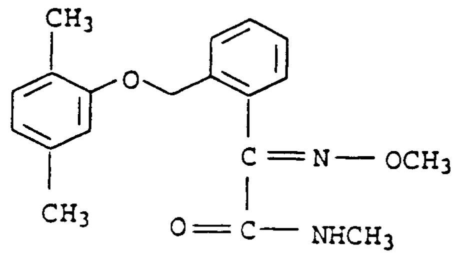

I.B

4. Mélange fongicide selon revendication 1, caractérisé par le fait que les proportions relatives en poids entre le composé I et le composé II sont de 10 : 1 à 0,1 : 1.

5. Procédé pour combattre les mycètes nuisibles, caractérisé par le fait que l'on traite les mycètes nuisibles, leur habitat ou les végétaux, semences, sols, surfaces, matières ou locaux qu'on veut protéger contre ces mycètes, par un composé de formule I selon revendication 1 et un composé de formule II selon revendication 1.

6. Procédé selon revendication 5, caractérisé par le fait que l'on applique le composé I et le composé II simultanément, ensemble ou séparément, ou successivement.

7. Procédé selon revendication 5, caractérisé par le fait que l'on traite les mycètes nuisibles, leur habitat ou les végétaux, semences, sols, surfaces, matières ou locaux qu'on veut protéger contre les mycètes nuisibles, par 0,01 à 0,5 kg/ha d'un composé I selon revendication 1.

8. Procédé selon revendication 5, caractérisé par le fait que l'on traite les mycètes nuisibles, leur habitat ou les végétaux, semences, sols, surfaces, matières ou locaux qu'on veut protéger contre les mycètes nuisibles par 0,1 à 1,0 kg/ha d'un composé II selon revendication 1.

9. Utilisation des composés I selon revendication 1, pour la préparation de mélanges à activité fongicide synergique.

10. Utilisation du composé I.A selon revendication 2, pour la préparation des mélanges à activité fongicide synergique selon revendication 1.

11. Utilisation du composé I.B selon revendication 3 pour la préparation des mélanges à activité fongicide synergique selon revendication 1.

12. Utilisation des composés II selon revendication 1 pour la préparation de mélanges à activité fongicide synergique selon revendication 1.